# EUROPÄISCHE PATENTSCHRIFT

(11) **EP 2 312 959 B1**
(45) Veröffentlichungstag und Bekanntmachung des Hinweises auf die Patenterteilung: **13.12.2017**
(21) Anmeldenummer: 09806395.1
(22) Anmeldetag: 13.08.2009
(51) Int. Cl.: A24D 3/10, C09C 1/36, C08L 1/12, C08K 9/02, C08K 3/22

(54) **PHOTOABBAUBARER KUNSTSTOFF SOWIE DESSEN VERWENDUNG**
PHOTO BIODEGRADABLE PLASTIC AND ITS APPLICATION
MATIÈRE SYNTHÉTIQUE PHOTODÉGRADABLE ET SON UTILISATION

(30) Priorität: 14.08.2008 EP 08014544
(43) Veröffentlichungstag der Anmeldung: 27.04.2011
(73) Patentinhaber: Rhodia Acetow GmbH, 79108 Freiburg (DE)
(72) Erfinder: HÖLTER, Dirk, 79312 Emmendingen (DE); KOPPE, Wolfgang, 79249 Merzhausen (DE)
(74) Vertreter: Trinks, Ole
(86) Internationale Anmeldenummer: PCT/EP2009/005888
(87) Internationale Veröffentlichungsnummer: WO 2010/017989

(56) Entgegenhaltungen:
- EP-A- 0 716 117
- WO-A-95/29209
- WO-A-2005/108505
- WO-A-2007/141342
- US-A- 4 022 632

## Beschreibung

Die Erfindung betrifft einen photoabbaubaren Kunststoff mit einem Gehalt an Celluloseestern sowie gegebenenfalls an Additiven sowie die Verwendung desselben, insbesondere in Filtertows zur Herstellung von Filterstöpseln von Filterzigaretten.

Kunststoffe, die am Ende ihres Lebenszyklus in die Umwelt gelangen oder gelangen können, sollten unter den dort herrschenden Bedingungen innerhalb kurzer Zeiträume abbaubar sein, um eine Belastung möglichst gering zu halten. Allerdings hängt auch bei Kunststoffen, die prinzipiell biologisch abbaubar sind, die Zeitdauer ihrer Zersetzung stark von den äußeren Bedingungen ab. So ist der Abbau unter Kompostierbedingungen schneller als in ebenfalls Mikroorganismen enthaltenden Böden. Deutlich langsamer ist der Bioabbau, wenn die Bedingungen für die dazu notwendigen Mikroorganismen unzureichend sind. Dies ist der Fall, wenn der entsprechende Kunststoff ganz oder teilweise auf einer Oberfläche, zum Beispiel Steinplatten, Asphalt, Sand, Erde oder Gras, liegt. Unter diesen Umständen sind andere oder zusätzliche Abbaumechanismen notwendig. Besonders geeignet ist in diesen Fällen die photokatalytische Zersetzung unter Einwirkung von Licht. Diese kann der alleinige Mechanismus für einen vollständigen Abbau des Materials sein, aber auch eine unterstützende Wirkung für andere Abbaumechanismen haben.

Seit langem ist bekannt, daß Titandioxid, insbesondere in der Anatasmodifikation, durch photokatalytische Wirkung organische Materialien zersetzen kann. Anatas absorbiert Licht im ultravioletten Bereich des Spektrums, wobei durch die nachfolgenden Elektronen- übertragungen Radikale entstehen, die einen durch Kettenmechanismus bewirkten Abbau einleiten. Dieser Abbau von Werkstoffen ist in der Regel schädlich für deren Funktion. Daher wurden zunächst im wesentlichen Arbeiten zur Stabilisierung von Titandioxid enthaltenden Materialien durchgeführt. Bezüglich dieser Arbeiten sei auf die US 2,206,278, die GB 780,749 und die US 3,961,975 verwiesen.

In der DE 24 36 260 C1 wird der Einsatz von Titandioxid-Pigmenten mit kleinem Partikeldurchmesser zum gezielten Abbau von Kunststoffzusammensetzungen unter dem Einfluß von Wetter und/oder Licht beschrieben. In der CA 1073581 wird der Einsatz von Titandioxid-Partikeln zum photokatalytischen Abbau von Polyolefinen offenbart.

In Folge eines verstärkten öffentlichen Focus in den 1990er Jahren auf den Verbleib von Kunststoffmaterialien nach der Erfüllung ihres Einsatzzweckes wurden verstärkt Arbeiten zum Abbau von Celluloseestern und daraus hergestelltem Filtertow in der Umwelt durchgeführt.

Der Zusatz von Titandioxidpigmenten zu Celluloseestern zum Zweck der Mattierung ist bereits seit langem Stand der Technik, was die US-A-2,206,278 anspricht.

Die WO-A-93/24685 befaßt sich mit dem beschleunigten Abbau von Cellulosestern bei Zusatz photokatalytisch wirksamer Titandioxid-Pigmente. Bei einem Vergleich herkömmlich eingesetzter Titandioxid-Pigmente, die mit einer die photokatalytische Wirkung reduzierenden Beschichtung ausgerüstet sind, mit unbeschichtetem Anatas, ergab sich im Weatherometer-Test für Einzelfäden aus Celluloseacetatzusammensetzungen mit unbeschichtetem Anatas eine moderat beschleunigte Abnahme der Zugfestigkeit. Ebenfalls eingesetzt wurden Anataspigmente, deren Oberfläche mit Ba/Ca-Sulfaten oder - Phosphaten behandelt worden war, mit dem Ziel die photokatalytische Wirkung weiter zu erhöhen. Mit diesen Pigmenten wurde eine verstärkte Freisetzung von Essigsäure in einer acetonischen Lösung von Celluloseacetat gefunden.

In der EP 716 117 A1 werden Celluloseesterzusammensetzungen mit Anatas dargestellt. Teilweise wurde die Oberfläche des Titandioxids mit Phosphorsäuresalzen, anderen Phosphorverbindungen, Polyalkoholen, Aminosäuren oder deren Salzen behandelt. Im Fadeometer-Test wurde an Filamenten aus den entsprechenden Celluloseacetatzusammen- setzungen gegenüber unbehandelten Anataspigmenten eine Beschleunigung der Zugfes- tigkeitsabnahme festgestellt, diese waren aber deutlich unter einer Verdoppelung. Das in den Beispielen verwendete Celluloseacetat hatte einen Substitutionsgrad DS von 2,14 und lag damit deutlich unter dem DS standardmäßig eingesetzter Celluloseester.

Die US-A-5,491,024 sowie die US-A-5,647,383 beschreiben den Zusatz von ultrafeinen Titandioxid -Partikeln zu Celluloseestern. Dabei ergab sich im Weatherometer-Test an einzelnen Fäden eine moderate Beschleunigung bei der Abnahme der Zugfestigkeit im Vergleich zu herkömmlichen Titandioxid-Pigmenten.

Die bislang beschriebenen Ergebnisse, die durch verschiedene Modifizierungen des Titandioxids erzielt wurden, sind im Hinblick auf eine signifikante Beschleunigung der Abbaurate von Celluloseesterzusammensetzungen unbefriedigend. Es läßt sich keine entscheidende Verbesserung erkennen. Dies gilt umso mehr, als der Masseverlust eines Materials bei dessen Zersetzung gewöhnlich wesentlich langsamer als der Verlust an mechanischer Festigkeit verläuft, was aus N.-S. Hon, J. Polym. Sci. 15, 1977, 725-744 hervorgeht. Sakthivel und Kisch, Angew. Chem., Ind. Ed. 42 (2003), 4908 beschreiben ein mit Kohlenstoff volumendotiertes Titandioxid. Dieses zeigte außer im UV-Bereich auch eine deutliche Absorption im sichtbaren Bereich. In der WO 2005/108505 wird ein TiO₂ beschrieben, das an der Oberfläche mit Kohlenstoff dotiert ist und ebenfalls im sichtbaren Licht absorbiert. Durch die erhöhte photokatalytische Aktivität sollen organische Schadstoffe und Verunreinigungen auf Materialoberflächen abgebaut werden. Somit sind dem Fachmann bereits kohlenstoffmodifizierte bzw. kohlenstoffdotierte aus dem Stand der Technik bekannt.

Auch der nachfolgend geschilderte Stand der Technik führt nicht zu wünschenswerten Verbesserungen: Nach der WO-A-95/29209 erfolgt eine Oberflächenbehandlung von Titandioxidteilchen z.B. mit Siliziumdioxid, Aluminiumoxid und/oder einer organischen Verbindung, wie Trimethylol. Hiermit soll die Agglomeration der Titandioxidteilchen verhindert werden. Nach der US-A-4,022,632 werden Titandioxidteilchen mit einem speziellen Salz behandelt. Die WO 2007/141342 A schlägt vor, dass Titandioxidteilchen mit einer oder mehreren Schichten organischer Substanzen versehen wird, wobei z.B. Polyglykole, Carbonsäuren, Alkalisalzen von Carbonsäuren, mehrwertige Alkohole, Trimethylolethan, Pentaerythrit oder Neopentylglykol herangezogen werden können.

Ausgehend von dem vorstehend geschilderten Stand der Technik lag der Erfindung die Aufgabe zugrunde, einen photoabbaubaren Kunststoff mit einem Gehalt an Celluloseestern sowie gegebenenfalls an Additiven vorzuschlagen, der sich unter Umweltbedingungen durch einen signifikant erhöhten Photoabbau auszeichnet. Darüber hinaus strebt es die Erfindung an, daß dieser photoabbaubare Kunststoff als Formkörper vorteilhafte Anwendung finden soll, insbesondere in einem Filtertow zur Herstellung eines Filterstöpsels eines Zigaretten- filters.

Erfindungsgemäß wird diese Aufgabe durch einen photoabbaubaren Kunststoff der eingangs bezeichneten Art dadurch gelöst, daß der photoabbaubare Kunststoff ein darin dispergiertes, photokatalytisch wirksames kohlenstoffmodifiziertes Titandioxid enthält, dies insbesondere in fein verteilter Form.

Vorteilhafte Ausgestaltungen der erfindungsgemäßen Lehre ergeben sich aus den Unteran- sprüchen 2 bis 18.

Bei der Auswahl der Celluloseester unterliegt die Erfindung keiner kritischen Einschränkung. Besonders bevorzugt sind Celluloseacetat, Cellulosepropionat, Cellulosebutyrat, Cellulose- acetatpropionat und/oder Celluloseacetatbutyrat. Auch im Hinblick auf den durchschnittlichen Substitutionsgrad (DS) des erfindungsgemäß präparierten Celluloseesters ist die Erfindung nicht relevant eingeschränkt. Der durchschnittliche Substitutionsgrad (DS) liegt vorzugsweise zwischen 1,5 und 3,0, insbesondere zwischen 2,2 bis 2,7, dies insbesondere beim Celluloseacetat. Zweckmäßig ist es, wenn der Celluloseester, insbesondere Celluloseacetat, bezüglich des durchschnittlichen Polymerisationsgrads im Hinblick auf eine vorteilhafte Lösung der gestellten Aufgabe optimiert ist. Der optimale durchschnittliche Polymerisa- tionsgrad liegt bei dem Celluloseester zwischen 150 und 500, insbesondere zwischen 180 und 280.

Es hat sich durch den Zusatz eines kohlenstoffmodifizierten Titandioxid, insbesondere eines kohlenstoffdotierten Titandioxids, in Celluloseesterzusammensetzungen überraschenderweise gezeigt, daß sich diese mit einer bisher nicht bekannten Geschwindigkeit in der Umwelt photokatalytisch abbauen lassen. Als Meßgröße wird, wie die nachfolgenden Beispiele zum Ausdruck bringen, die zeitliche Reduzierung der Masse des photoabbaubaren Kunststoffs gewählt. Der Kern der Erfindung liegt also in der Auswahl eines kohlenstoffmodifizierten Titandioxids, das auf seiner Oberfläche oder auch im gesamten Volumen kohlenstoffmodifiziert ist. Bevorzugt wird ein kohlenstoffmodifiziertes Titandioxid, dessen Oberfläche kohlenstoffdotiert ist. Durch die Dotierung wird die Bandlücke des Halbleiters Titandioxid verkleinert und es kann im Vergleich zu undotiertem Titandioxid auch längerwelliges Licht zur Anregung eines Valenzbandelektrons und damit zur Aktivierung der photokatalytischen Eigenschaften genutzt werden.

Zweckmäßigerweise wird die Kristallitgröße des kohlenstoffdotierten Titandioxids optimiert, wobei die Kristallitgröße vorzugsweise zwischen 5 und 150 nm, insbesondere zwischen 7 bis 25 nm liegt. Im Einzelfall kann es vorteilhaft oder sogar notwendig sein, ein handelsübliches grobteiliges kohlenstoffmodifiziertes Titandioxid zu mahlen, um die optimale Korngröße einzustellen. Zweckmäßigerweise weist das kohlenstoffmodifizierte Titandioxid eine Dichte (ISO 787, Teil 10) von 3,0 bis 5,0 g/cm³ auf, insbesondere von 3,5 bis 4,2 g/cm³ auf. Vorteilhaft wirkt sich auch für einen Abbau des Celluloseesterhaltigen Kunststoffs eine Optimierung der spezifischen Oberfläche des kohlenstoffmodifizierten Titandioxids aus. Dabei ist es bevorzugt, wenn die spezifische Oberfläche BET des kohlenstoffdotierten Titandioxids größer als 100 m²/g, insbesondere größer als 250 m²/g ist. Besonders vorteilhaft wirkt sich die Einbeziehung eines kohlenstoffmodifizierten Titandioxids in den erfindungsgemäßen photoabbaubaren Kunststoff dann aus, wenn das kohlenstoffmodifizierte Titandioxid mit einer gegenüber reinem Titandioxid signifikanten Lichtabsorption im Bereich von λ ≥ 400 nm gekennzeichnet ist.

Um die Photoabbaubarkeit des erfindungsgemäßen Kunststoffs weiter zu verbessern, ist es zweckmäßig, dessen Gehalt an kohlenstoffmodifiziertem Titandioxid auf 0,1 bis 5 Gew.-%, insbesondere auf 0,3 bis 1,5 Gew.-% einzustellen.

Der Kohlenstoffgehalt des kohlenstoffmodifizierten Titandioxids ist nicht wesentlich beschränkt. Vorzugsweise enthält das kohlenstoffmodifizierte Titandioxid Kohlenstoff in einer Menge von 0,05 bis 5 Gew.-%, insbesondere von 0,3 bis 1,5 Gew.-%.

Erfindungsgemäß ist es möglich, dass der photoabbaubare Kunststoff im Wesentlichen nicht allein auf Celluloseestern basiert. Es können übliche Additive wie z. B. Weichmacher, einbezogen sein, so in dem Falle der Verwendung in Fasern der Filtermaterialien von Zigaretten.

Andererseits kann zusätzlich ein nicht-kohlenstoffmodifiziertes Titandioxid, insbesondere Anatas, in feiner Dispergierung einbezogen sein, dies insbesondere in dem die Zigarettenindustrie betreffenden Anwendungsfall. Um den erfindungsgemäßen Gedanken möglichst weitgehend zu folgen und die besondere photokatalytische Wirksamkeit des kohlenstoffmodifizierten Titandioxids beim Abbau eines Kunststoffs zu nutzen, ist es bevorzugt, dass der Gehalt des photoabbaubaren Kunststoffs an Celluloseester mindestens 60 Gew.-% insbesondere mindestens 90 Gew.-% ausmacht.

Die besonders herausragende Photoabbaubarkeit des erfindungsgemäßen Kunststoffs, wie sie durch die nachfolgenden Beispiele belegt ist, erweist sich insbesondere dann, wenn der photoabbaubare Kunststoff in einen Formkörper überführt wird, insbesondere in Fasern, Folien, insbesondere tiefgezogene Folien, vor allem zur Anwendung als Verpackungs- materialien, von Spritzgußartikeln, dickwandigen Formkörpern, Granulaten, Mikrobeads, Perlen sowie Gefäßen. Besonders vorteilhaft ist daher die Weiterverarbeitung dieser Fasern zu Filtertows, mit denen Filterstäbe und daraus Filterstöpsel von Filterzigaretten hergestellt werden. Derartige Filterstöpsel, die sich in der Umwelt finden, werden bei Lichteinwirkung bedeutend schneller als solche abgebaut, die nicht erfindungsgemäß gestaltet sind.

Der besondere Vorteil der Erfindung besteht darin, dass das erfindungsgemäße Produkt, wie die nachfolgenden Beispiele zeigen, im Vergleich zu den Vergleichsproben eine nicht zu erwartende Überlegenheit beim photokatalytischen Abbau zeigt. So liegt die Abbaurate in einem 36-Wochenzeitraum bei Filterstöpseln (Gewichtsabnahme nach Abzug der wasserlöslichen Anteile von ~ 6 Gew.-%) beispielsweise gegenüber dem besten Beispiel 5 (Vergleichsbeispiel 3) (unbeschichtetes Anatas) mehr als 3 mal höher. Noch deutlicher wird die Überlegenheit des erfindungsgemäßen Erzeugnisses, wenn mit einem Vergleichsprodukt verglichen wird, das kein Titandioxid enthält. Gleichermaßen wird eine erhebliche Überlegenheit festgestellt, wenn zum Vergleich ein SiO₂/A₂O₃-beschichtetes Anatas herangezogen wird.

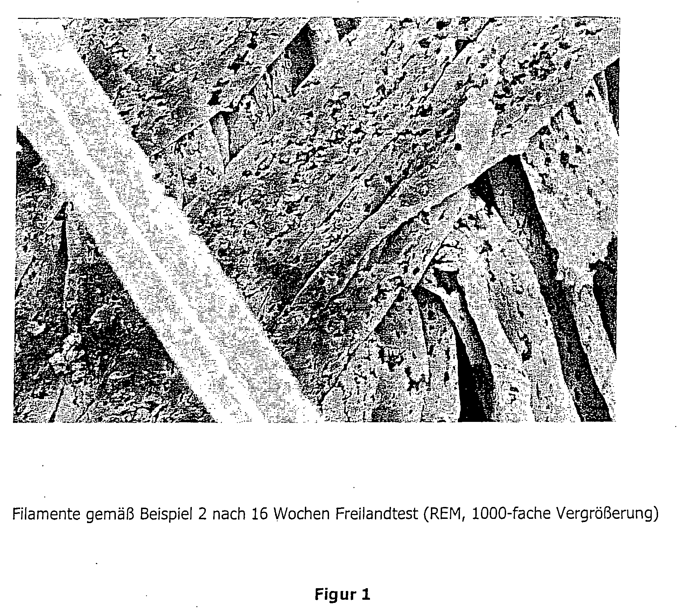

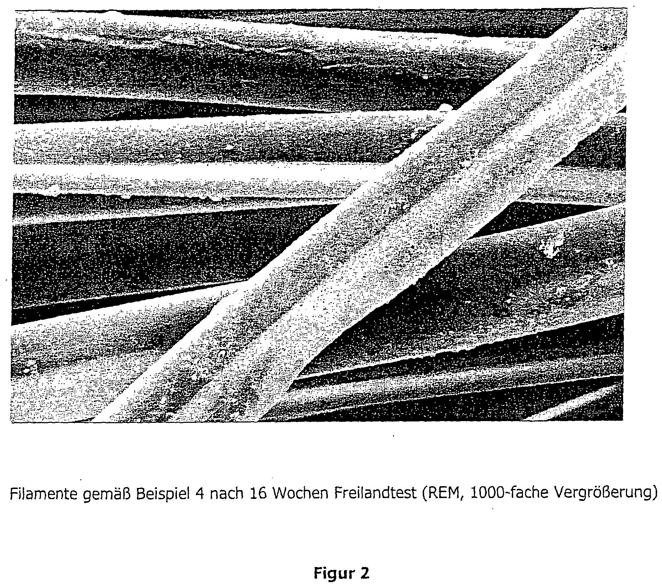

Der überlegene Photoabbau der gemäß der Erfindung erzielt wird, geht auch in guter Übereinstimmung aus den beiliegenden Figuren 1 und 2 hervor. Die Figur 1 zeigt eine REM-Aufnahme der Filamente des Probenkörpers 1 gemäß Beispiel 2 nach 16 Wochen Freilandtest der (1000-fache Vergrößerung), während die Figur 2 Filamente gemäß Beispiel 4 (Vergleichsbeispiel 2) in einer REM-Aufnahme nach 16 Wochen Freilandtest zeigt (ebenfalls 1000-fache Vergrößerung). Der erfindungsgemäße photoabbaubare Kunststoff zeigt eine grobe Zerklüftung und gebrochene Filamente und damit ein gutes Abbauergebnis, was für das zum Vergleich herangezogene Beispiel 4 nicht gilt. Hier ist eher eine glatte Oberfläche der Filamente feststellbar.

Schließlich sei noch angemerkt, daß das Verfahren zur Herstellung des erfindungsgemäßen photoabbaubaren Kunststoffs keinen besonderen Beschränkungen unterliegt. Eine Möglichkeit besteht darin, die Einzelbestandteile dadurch zu vermischen, indem der Kunststoff aufgeschmolzen und die relevanten Bestandteile eingemischt werden. Die Herstellung der Fasern erfolgt zweckmäßigerweise nach dem Trockenspinnverfahren, wenngleich das Nassspinnverfahren ebenfalls in Betracht kommen kann. Beim Trocken- spinnverfahren wird der Celluloseester vorzugsweise in üblicher Weise, beispielsweise in Aceton, aufgelöst. Dann werden die relevanten weiteren Bestandteile, wie insbesondere das kohlenstoffmodifizierte Titandioxid hinzugegeben, um dann in einem Trocknungskanal den üblichen Spinnvorgang vorzunehmen.

Die Erfindung wird nachfolgend anhand von Beispielen noch näher erläutert:

### Beispiel 1 (allgemeine Herstellungsweise)

Herstellung der Titandioxid-Suspension: 15% Titandioxid in Aceton mit 3 % Celluloseacetat zur Stabilisierung der Suspension werden über eine Perlmühle (WAB Dynomill Multilab, 1,4 l Mahlvolumen) mit einem Durchsatz von 8,5 kg/h bis zu einer Partikelgröße von D50 = 1,2 µm gemahlen.
Es kommen drei verschiedene Titandioxidtypen zum Einsatz, was die nachfolgende Tabelle 1 zeigt.

**Tabelle 1**

| Typ | Kristallmodifikation | anorganische Oberflächenbehandlung | Ölzahl (ISO 787/5) |
|---|---|---|---|
| A | Anatas | Kohlenstoffdotierung | ∼ 50 |
| B | Anatas | SiO₂/Al₂O₃ | 20 |
| C | Anatas | keine | 20 |

Herstellung der Spinnlösung: 26 Gewichtsteile eines Celluloseacetats mit einem DS von 2,45 werden in 74 Teilen eines Lösungsmittelgemisches von Aceton/Wasser 96:4 gelöst. Im Falle eines Titandioxid-Zusatzes werden dieser Lösung 1,73 Gew.-% Titandioxid-Suspension zudosiert. Die so hergestellte Spinnlösung wird homogenisiert und anschließend filtriert.

Herstellung der Fäden: Aus der Spinnlösung werden im Trockenspinnverfahren 3,0-Denier-Filamente hergestellt.

Herstellung der Filterstäbe: Die gebildeten Celluloseacetatfäden werden zu einem Band zusammengefasst, mit einer Stauchkammerkräuselmaschine gekräuselt und getrocknet. Die Spezifikation des so hergestellten Filtertows ist 3 Y 35000. Diese Spezifikationsbezeichnung bedeutet:
Filamenttiter: 3,3 dtex
Gesamttiter: 38.500 dtex
Querschnittsform der Filamente: Y
Das Filtertow wird auf einer Filterstabmaschine zu Filterstäben der Länge 126 mm und einem Durchmesser von 7,8 mm verarbeitet. Die Menge an dabei aufgebrachtem Triacetin beträgt 6 % des Gesamtgewichts.

### Beispiel 2 (Erfindung)

Titandioxid Typ A wird der Spinnlösung nach der in Beispiel 1 beschriebenen Methode im Verhältnis 1:99, bezogen auf Celluloseacetat, zugesetzt.

### Beispiel 3 (Vergleichsbeispiel 1)

Wie Beispiel 1, aber ohne Zusatz von Titandioxid.

### Beispiel 4 (Vergleichsbeispiel 2)

Wie Beispiel 2, aber mit Zusatz vom Titandioxid Typ B.

### Beispiel 5 (Vergleichsbeispiel 3)

Wie Beispiel 2, aber mit Zusatz vom Titandioxid Typ C.

### Beispiel 6 (Testmethode und Durchführung eines Freilandtests)

### Probekörper 1:

Die Probekörper werden hergestellt, indem Fäden zu je 840 Filamenten so gehäkelt werden, daß die einzelnen Proben ein Gewicht von je rund 0,3 g bei einer Fläche von je etwa 3,5 x 1,3 cm haben. Die so hergestellten Probekörper weisen im Vergleich zu Einzelfilamenten oder den für gewöhnlich beschriebenen Fäden aus < 200 Filamenten (vgl. zitierte Patentschriften) höhere Materialdicken sowie zusätzlich Materialüberlagerungen auf, die vom Licht schwerer durchdrungen werden, und können zudem im Freilandtest nicht so leicht desintegrieren.

### Probekörper 2:

Die Probekörper werden hergestellt, indem das Papier des Filterstabes (hergestellt gemäß Beispiel 1) entfernt und der verbleibende Filterstab in Filterstöpsel mit 21 mm Länge geschnitten wird.

### Testdurchführung:

Die Probekörper werden im Freiland in Käfige gelegt. Die Käfige bestehen aus einem Metallgewebe mit 85 % offener Fläche und einer Bodenplatte aus Beton. Die Käfige sind so im Freiland aufgestellt, daß abgesehen vom Einfluß des Drahtgewebes das Sonnenlicht ungehindert einstrahlen kann und auch andere Witterungseinflüsse wirken können. Zur Unterscheidung der Proben sind die Käfige in einzelne Kammern unterteilt. Die Probekörper eines Materials werden jeweils auf verschiedene Käfige verteilt, um mögliche lokale Einflüsse ausschließen zu können.

Die Probekörper werden alle 4 Wochen entnommen, von groben Anhaftungen befreit, 24 h bei 20°C und 60 % Luftfeuchtigkeit konditioniert und anschließend ausgewogen. Die Freilandtests wurden in Freiburg i. Br. (Deutschland) durchgeführt. Tabelle 2 zeigt die Ergebnisse für Probekörper 1, durchgeführt unter vorwiegend sommerlichen Bedingungen, Tabelle 3 für die Probekörper 2, hauptsächlich unter winterlichen Bedingungen.

**Tabelle 2**

| (Gewichtsabnahme (Gew.-%) der Probekörper 1 im Freilandtest auf Beton in Abhängigkeit von der Zeit) | | | | |
|---|---|---|---|---|
| | 4 Wochen | 8 Wochen | 12 Wochen | 16 Wochen |
| Beispiel 2 | 3,7 | 8,0 | 14,5 | 21,5 |
| Beispiel 3 | 0,6 | 0,5 | -0,2 | -0,4 |
| Beispiel 4 | 1,5 | 1,5 | 1,1 | 0,9 |
| Beispiel 5 | 2,5 | 3,9 | 5,3 | 7,1 |

**Tabelle 3**

| (Gewichtsabnahme (Gew.-%) der Probekörper 2 im Freilandtest auf Beton in Abhängigkeit von der Zeit) | | | | |
|---|---|---|---|---|
| | 12 Wochen | 20 Wochen | 28 Wochen | 36 Wochen |
| Beispiel 2 | 8,7 | 10,6 | 14,5 | 24,2 |
| Beispiel 4 | 6,2 | 6,0 | 6,7 | 7,2 |
| Beispiel 5 | 7,2 | 7,9 | 9,4 | 11,3 |

| | | | | |
|---|---|---|---|---|
| Anmerkung: Zwischen 6 und 7 Gew.-% verlieren die Proben (Filterstöpsel) bereits am Anfang des Tests, dies aufgrund Herauslösens wasserlöslicher Bestandteile | | | | |

## Patentansprüche

1. Photoabbaubarer Kunststoff mit einem Gehalt an Celluloseestern sowie gegebenenfalls an Additiven, **dadurch gekennzeichnet, dass** der photoabbaubare Kunststoff ein darin dispergiertes, photokatalytisch wirksames kohlenstoffmodifiziertes Titandioxid enthält.

2. Photoabbaubarer Kunststoff nach Anspruch 1, **dadurch gekennzeichnet, dass** der Celluloseester Celluloseacetat, Cellulosepropionat, Cellulosebutyrat, Celluloseacetatpropionat und/oder Celluloseacetatbutyrat darstellt.

3. Photoabbaubarer Kunststoff nach Anspruch 1 oder 2, **dadurch gekennzeichnet, dass** der Celluloseester, insbesondere Celluloseacetat, einen durchschnittlichen Substitutionsgrad (DS) von 1,5 bis 3,0, insbesondere 2,2 bis 2,7, aufweist.

4. Photoabbaubarer Kunststoff nach einem der Ansprüche 1 bis 3, **dadurch gekennzeichnet, dass** der Celluloseester, insbesondere Celluloseacetat, einen durchschnittlichen Polymerisationsgrad von 150 bis 500, insbesondere von 180 bis 280 aufweist.

5. Photoabbaubarer Kunststoff nach mindestens einem der vorhergehenden Ansprüche, **dadurch gekennzeichnet, daß** er zusätzlich in feiner Dispergierung ein nicht-kohlenstoffmodifiziertes Titandioxid enthält, insbesondere Anatas.

6. Photoabbaubarer Kunststoff nach mindestes einem der vorhergehenden Ansprüche, **dadurch gekennzeichnet, dass** das kohlenstoffmodifizierte Titandioxid auf seiner Oberfläche kohlenstoffdotiert ist.

7. Photoabbaubarer Kunststoff nach mindestens einem der vorhergehenden Ansprüche, **dadurch gekennzeichnet, dass** das kohlenstoffmodifizierte Titandioxid eine Kristallitgröße von 5 bis 150 nm, insbesondere von 7 bis 25 nm aufweist.

8. Photoabbaubarer Kunststoff nach mindestens einem der vorhergehenden Ansprüche, **dadurch gekennzeichnet, dass** das kohlenstoffmodifizierte Titandioxid eine Dichte (ISO 787, Teil 10) von 3,0 bis 5,0 g/cm³, insbesondere von 3,5 bis 4,2 g/cm³ aufweist.

9. Photoabbaubarer Kunststoff nach mindestens einem der vorhergehenden Ansprüche, **dadurch gekennzeichnet, dass** die spezifische Oberfläche (nach BET) des kohlenstoff-modifizierten Titandioxids größer als 100 m²/g, insbesondere größer als 250 m²/g ist.

10. Photoabbaubarer Kunststoff nach mindestens einem der vorhergehenden Ansprüche, **dadurch gekennzeichnet, dass** das kohlenstoffmodifizierte Titandioxid mit einer gegenüber reinem Titandioxid signifikanten Lichtabsorption im Bereich von λ ≥ 400 nm gekennzeichnet ist.

11. Photoabbaubarer Kunststoff nach mindestens einem der vorhergehenden Ansprüche, **dadurch gekennzeichnet, dass** der photoabbaubare Kunststoff 0,1 bis 5 Gew.-%, insbesondere 0,3 bis 1,5 Gew.-% kohlenstoffdotiertes Titandioxid enthält.

12. Photoabbaubarer Kunststoff nach mindestens einem der vorhergehenden Ansprüche, **dadurch gekennzeichnet, dass** das kohlenstoffmodifizierte Titandioxid einen Kohlenstoffgehalt von 0,05 bis 5 Gew.-%, insbesondere von 0,3 bis 1,5 Gew.-% aufweist.

13. Photoabbaubarer Kunststoff nach mindestens einem der vorhergehenden Ansprüche, **dadurch gekennzeichnet, daß** ein Gehalt an Celluloseester mindestens 60 Gew.-%, insbesondere mindestens 90 Gew.-% ausmacht.

14. Photoabbaubarer Kunststoff nach mindestens einem der vorhergehenden Ansprüche als Formköper, insbesondere in Form von Fasern, Folien, insbesondere tiefgezogenen Folien, insbesondere zur Anwendung als Verpackungsmaterialien, von Spritzgussartikeln, dickwandigen Formkörpern, Granulaten, Mikrobeads, Perlen sowie Gefäßen.

15. Photoabbaubarer Kunststoff nach Anspruch 14, **dadurch gekennzeichnet, dass** die Fasern Bestandteile eines Filtertows sind.

16. Verwendung des photoabbaubaren Kunststoffs nach Anspruch 15, **dadurch gekennzeichnet, dass** das Filtertow zur Herstellung von Filterstöpseln von Zigarettenfiltern herangezogen wird.

## Claims

1. A photodegradable plastic having a content of cellulose esters as well as optional additives **characterized in that** the photodegradable plastic contains a photocatalytically active carbon-modified titanium dioxide dispersed therein.

2. The photodegradable plastic according to claim 1, **characterized in that** the cellulose ester represents cellulose acetate, cellulose propionate, cellulose butyrate, cellulose acetate propionate and/or cellulose acetate butyrate.

3. The photodegradable plastic according to claim 1 or 2, **characterized in that** the cellulose ester, in particular cellulose acetate, has an average degree of substitution (DS) of 1.5 to 3.0, in particular 2.2 to 2.7.

4. The photodegradable plastic according to one of claims 1 to 3, **characterized in that** the cellulose ester, in particular cellulose acetate, has an average degree of polymerization of 150 to 500, in particular 180 to 280.

5. The photodegradable plastic according to at least one of the preceding claims, **characterized in that** it additionally contains a non-carbon-modified titanium dioxide, in particular anatase, in fine dispersion.

6. The photodegradable plastic according to at least one of the preceding claims, **characterized in that** the carbon-modified titanium dioxide is carbon-doped on its surface.

7. The photodegradable plastic according to at least one of the preceding claims, **characterized in that** the carbon-modified titanium dioxide has a crystallite size of 5 to 150 nm, in particular 7 to 25 nm.

8. The photodegradable plastic according to at least one of the preceding claims, **characterized in that** the carbon-modified titanium dioxide has a density (ISO 787, Part 10) of 3.0 to 5.0 g/cm³, in particular 3.5 to 4.2 g/cm³.

9. The photodegradable plastic according to at least one of the preceding claims, **characterized in that** the specific surface area (per BET) of the carbon-modified titanium dioxide is greater than 100 m²/g, in particular greater than 250 m²/g.

10. The photodegradable plastic according to at least one of the preceding claims, **characterized in that** the carbon-modified titanium dioxide is **characterized by** a significant light absorption in the range of λ ≧ 400 nm compared to pure titanium dioxide.

11. The photodegradable plastic according to at least one of the preceding claims, **characterized in that** the photodegradable plastic contains 0.1 to 5% by weight, in particular 0.3 to 1.5% by weight, of carbon-doped titanium dioxide.

12. The photodegradable plastic according to at least one of the preceding claims, **characterized in that** the carbon-modified titanium dioxide has a carbon content of 0.5 to 5% by weight, in particular 0.3 to 1.5% by weight.

13. The photodegradable plastic according to at least one of the preceding claims, **characterized in that** a cellulose ester content accounts for at least 60% by weight, in particular at least 90% by weight.

14. The photodegradable plastic according to at least one of the preceding claims as a molded body, in particular in the form of fibers, films, in particular deep-drawn films, in particular for use as packaging materials, for injection-molded articles, thick-walled molded bodies, granulates, microbeads, pellets as well as vessels.

15. The photodegradable plastic according to claim 14, **characterized in that** the fibers are elements of a filter tow.

16. Use of the photodegradable plastic according to claim 15, **characterized in that** the filter tow is used for the production of filter plugs for cigarette filters.

## Revendications

1. Matière plastique photodégradable ayant une teneur en esters de cellulose et le cas échéant en additifs,
**caractérisée en ce que** la matière plastique photodégradable contient du dioxyde de titane dispersé dans celle-ci, actif sur le plan photocatalytique et modifié par carbone.

2. Matière plastique photodégradable selon la revendication 1, **caractérisée en ce que** l'ester de cellulose représente de l'acétate de cellulose, du propionate de cellulose, du butyrate de cellulose, de l'acétate propionate de cellulose et/ou de l'acétate butyrate de cellulose.

3. Matière plastique photodégradable selon la revendication 1 ou 2, **caractérisée en ce que** l'ester de cellulose, en particulier l'acétate de cellulose, présente un degré de substitution moyen (DS) de 1,5 à 3,0, en particulier de 2,2 à 2,7.

4. Matière plastique photodégradable selon l'une des revendications 1 à 3, **caractérisée en ce que** l'ester de cellulose, en particulier l'acétate de cellulose, présente un degré de polymérisation moyen de 150 à 500, en particulier de 180 à 280.

5. Matière plastique photodégradable selon l'une des revendications précédentes, **caractérisée en ce qu'**elle contient en supplément en dispersion fine un dioxyde de titane non modifié par carbone, en particulier de l'anatase.

6. Matière plastique photodégradable selon l'une des revendications précédentes, **caractérisée en ce que** le dioxyde de titane modifié par carbone est dopé en carbone sur sa surface.

7. Matière plastique photodégradable selon l'une des revendications précédentes, **caractérisée en ce que** le dioxyde de titane modifié par carbone présente une taille de cristallite de 5 à 150 nm, en particulier de 7 à 25 nm.

8. Matière plastique photodégradable selon l'une des revendications précédentes, **caractérisée en ce que** le dioxyde de titane modifié par carbone présente une masse volumique (ISO 787, partie 10) de 3,0 à 5,0 g/cm³, en particulier de 3,5 à 4,2 g/cm³.

9. Matière plastique photodégradable selon l'une des revendications précédentes, **caractérisée en ce que** la surface spécifique (selon BET) du dioxyde de titane modifié par carbone est supérieure à 100 m²/g, en particulier supérieure à 250 m²/g.

10. Matière plastique photodégradable selon l'une des revendications précédentes, **caractérisée en ce que** le dioxyde de titane modifié par carbone est **caractérisé par** une absorption de lumière significative par rapport au dioxyde de titane pur, qui est comprise dans la plage de λ ≥ 400 nm.

11. Matière plastique photodégradable selon l'une des revendications précédentes, **caractérisée en ce que** la matière plastique photodégradable contient de 0,1 à 5 % en poids, en particulier de 0,3 à 1,5 % en poids de dioxyde de titane dopé en carbone.

12. Matière plastique photodégradable selon l'une des revendications précédentes, **caractérisée en ce que** le dioxyde de titane modifié par carbone présente une teneur en carbone de 0,05 à 5 % en poids, en particulier de 0,3 à 1,5 % en poids.

13. Matière plastique photodégradable selon l'une des revendications précédentes, **caractérisée en ce qu'**une teneur en ester de cellulose représente au moins 60 % en poids, en particulier au moins 90 % en poids.

14. Matière plastique photodégradable selon l'une des revendications précédentes à titre de corps façonnés, en particulier sous forme de fibres, de feuilles, en particulier de feuilles embouties, en particulier pour l'utilisation en tant que matériaux d'emballage, articules moulés par injection, corps façonnés à paroi épaisse, granulés, micro-perles, perles et en tant que réceptacles.

15. Matière plastique photodégradable selon la revendication 14, **caractérisée en ce que** les fibres sont des constituants d'un cordon filtrant.

16. Utilisation de la matière plastique photodégradable selon la revendication 15, **caractérisée en ce que** le cordon filtrant est utilisé pour réaliser des bouchons filtrants de filtres de cigarette.
